# EUROPÄISCHE PATENTANMELDUNG

(11) **EP 3 168 579 A1**
(43) Veröffentlichungstag der Anmeldung: **17.05.2017**
(21) Anmeldenummer: 15194470.9
(22) Anmeldetag: 13.11.2015
(51) Int. Cl.: G01F 23/284, H01Q 13/00, H01Q 1/08, H01Q 1/22, H01Q 13/02, H01Q 13/06, G01S 7/03, G01S 13/88

(54) **HORNANTENNE**

(71) Anmelder: VEGA Grieshaber KG, 77709 Wolfach (DE)
(72) Erfinder: Falk, Johannes, 78112 St. Georgen (DE); Kienzle, Klaus, 77736 Zell am Harmersbach (DE); Lenk, Fritz, 77761 Schiltach (DE); Baur, Roland, 78126 Königsfeld (DE)
(74) Vertreter: Westphal, Mussgnug & Partner Patentanwälte mbB

(57) **Zusammenfassung**

Hornantenne (1) für ein Radarmessgerät, insbesondere ein Radar-Füllstandmessgerät, mit einem in vorderseitiger in einer Hauptabstrahlrichtung strahlenden Antennenhorn (3), einer rückseitigen Speiseeinrichtung (5) und einer Füllung (7), die die Hornantenne (1) wenigstens teilweise ausfüllt und vorderseitig verschließt, wobei zwischen der Füllung (7) und dem Antennenhorn (3) wenigstens eine Dichtung (9) angeordnet ist, wobei die Dichtung (9) in einer Radialrichtung (R) senkrecht zur Hauptabstrahlrichtung (HA) der Hornantenne (1) wenigstens teilweise außerhalb des Antennenhorns (3) oder einer Verlängerung (V) des Antennenhorns (3) angeordnet ist.

## Beschreibung

Die vorliegende Erfindung betrifft eine Hornantenne für ein Radarmessgerät, insbesondere ein Radar-Füllstandmessgerät gemäß dem Oberbegriff des Patentanspruchs 1.

Aus dem Stand der Technik sind Radarmessgeräte, beispielsweise Radar-Füllstandmessgeräte bekannt, die nach dem Laufzeitprinzip einen Füllstand eines in einem Behälter befindlichen Füllguts, insbesondere von Flüssigkeiten und Schüttgütern detektieren. Solche Radar-Füllstandmessgeräte sind beispielsweise mit Hornantennen ausgestattet, über die ein eingekoppeltes HF-Signal in Richtung des Füllgutes abgestrahlt und von diesem reflektiert wird. In einem kombinierten Sende- und Empfangssystem des Radar-Füllstandmessgerätes werden die vom Füllgut reflektierten Mikrowellenimpulse erfasst und durch Messung der Laufzeit dieser Pulse ein Abstand von dem Füllstandmessgerät zu dem Füllgut ermittelt.

Hornantennen haben grundsätzlich einen einfachen und robusten Aufbau, einen sehr guten Wirkungsgrad und sind kostengünstig herzustellen. Sobald allerdings eine Innenseite des Antennenhorns verschmutzt wird, wirkt sich dies negativ auf die Leistungsfähigkeit der Hornantenne aus.

Aus dem Stand der Technik ist es daher bekannt, die Antennen solcher Füllstandmessgeräte gegen Verschmutzung und/oder Korrosion aufgrund einer aggressiven Messumgebung zu schützen. Dies wird beispielsweise dadurch erreicht, dass die Antennen mit einem Radom vorderseitig abgedeckt oder das Horn mit einem Medium, z. B. Kunststoff gefüllt ist.

Die Abdeckung der Hornantenne mit einem Radom kann zwar Verschmutzungen und aggressive Medien aus dem Antennenhorn fernhalten, solche Hornantennen sind aber nach wie vor nicht zum Einsatz in Über- oder Unterdruckumgebungen geeignet.

Im Stand der Technik existieren daher auch Hornantennen, bei denen das Antennenhorn vollständig mit einem festen Medium, z. B. Kunststoff gefüllt ist. Ein Zwischenraum zwischen dem Antennenhorn und der Füllung muss dabei druckfest abgedichtet werden, damit keine unerwünschten Medien in Richtung der Einspeisung und der Elektronik vordringen können. Im Stand der Technik werden als Dichtung meist O-Ringe, die zwischen dem Antennenhorn und dem Dielektrikum in einem Hauptabstrahlrichtung vorne liegenden Bereich der Antenne eingesetzt werden, benutzt. Diese O-Ringe erzeugen jedoch innerhalb der Antenne Reflexionen der eingespeisten elektromagnetischen Wellen, die einen Teil der eingespeisten Energie zurück zur Einspeisung, beispielsweise einem Hohlleiter reflektieren, woraus ein verschlechterter Returnloss und somit ein geringerer Antennengewinn resultiert. Der Wirkungsgrad der Antenne sinkt somit.

Die reflektierte Energie erzeugt im Radargerät sogenannte Pseudoechos, die zu einem erhöhten Antennenklingeln führen.

Es wurde erkannt, dass die Ursache für diese Art von Reflexionen hauptsächlich in den unterschiedlichen Dielektrizitätszahlen zwischen O-Ring und Füllung des Antennenhorns liegt und somit das Material des O-Rings einen unmittelbaren Einfluss auf die Charakteristik der Antenne hat. Werden für unterschiedliche Einsatzzwecke der Antenne unterschiedliche Dichtungen bzw. O-Ringe eingesetzt, so ändert sich die Performance der Antenne. Dies wird als Nachteil empfunden.

Hier setzt die vorliegende Erfindung an.

Es ist die Aufgabe der vorliegenden Erfindung eine aus dem Stand der Technik bekannte Antenne derart weiterzubilden, dass ein Antennenklingeln möglichst minimiert und unerwünschte Reflexionen innerhalb der Antenne eliminiert werden. Es soll ferner eine Unempfindlichkeit der Antenne gegenüber unterschiedlichen Materialien für die Abdichtung erreicht werden.

Diese Aufgabe wird durch eine Hornantenne mit den Merkmalen des Patentanspruchs 1 gelöst.

Vorteilhafte Weiterbildungen sind Gegenstand abhängiger Patentansprüche.

Eine erfindungsgemäße Hornantenne für ein Radarmessgerät, insbesondere ein Radar-Füllstandmessgerät weist ein in vorderseitiger Richtung strahlendes Antennenhorn, eine rückseitige Speiseeinrichtung und eine Füllung, die die Hornantenne wenigstens teilweise ausfüllt du vorderseitig verschließt auf, wobei zwischen der Füllung und dem Antennenhorn wenigstens eine Dichtung angeordnet ist. Eine erfindungsgemäße Hornantenne zeichnet sich dadurch aus, dass die Dichtung in einer Radialrichtung senkrecht zur Hauptabstrahlrichtung der Hornantenne wenigstens teilweise außerhalb des Antennenhorns oder einer gedachten Verlängerung des Antennenhorns angeordnet ist. Da sich die in die Hornantenne eingekoppelten elektromagnetischen Wellen typischerweise innerhalb der Füllung, die typischerweise aus einem dielektrischen Material besteht, ausbreiten, wobei eine Ausbreitungsrichtung normalerweise durch eine kegelförmige Ausgestaltung des Antennenhorns vorgegeben ist, kann durch eine Anordnung der Dichtungen wenigstens teilweise außerhalb des Antennenhorns bzw. außerhalb einer Verlängerung des Antennenhorns eine deutlichere Funktion der an einer Grenzfläche zwischen dem Material der Füllung und dem Material der Dichtung hervorgerufenen Reflexionen erreicht werden. Idealerweise sind die Dichtungen vollständig außerhalb einer Kontur des Antennenhorns angeordnet, so dass derartige Reflexionen an einer Grenzfläche zwischen der Füllung und der Dichtung vollständig vermieden werden können.

Es sei an dieser Stelle angemerkt, dass im Sinne der vorliegenden Anmeldung eine Anordnung der Dichtung wenigstens teilweise außerhalb des Antennenhorns oder einer Verlängerung des Antennenhorns so zu verstehen ist, dass die Dichtung wenigstens teilweise außerhalb einer linearen Verlängerung oder bei einer Unterbrechung der Kontur des Antennenhorns teilweise außerhalb einer linearen Fortsetzung dieser Kontur angeordnet ist.

Prinzipiell kann als Dichtung jedwedes zu einer Abdichtung des Zwischenraums zwischen Antennenhorn und Füllung geeignete Material zum Einsatz kommen. Eine besonders einfache Ausgestaltung kann jedoch erreicht werden, wenn die Dichtung als O-Ring ausgebildet ist, da solche O-Ringe in einer Vielzahl von Ausgestaltungsformen und Materialien frei auf dem Markt verfügbar sind.

Eine relativ zum Antennenhorn und der Füllung festgelegte Anordnung der Dichtung sowie eine geschickte Anordnung außerhalb des Antennenhorns bzw. einer Verlängerung des Antennenhorns kann erreicht werden, wenn die Dichtungen in einer Nut angeordnet ist. Eine solche Nut kann beispielsweise in dem Antennenhorn und/oder der Füllung vorgesehen sein.

Beispielsweise kann das Antennenhorn wenigstens im Bereich der Dichtung eine in Radialrichtung nach außen weisende Anformung aufweisen. Eine solche Anformung kann beispielsweise als eine in Radialrichtung nach außen springende Stufe mit einem sich in Hauptabstrahlrichtung erstreckenden umlaufenden Kragen und/oder als umlaufende Nut ausgebildet sein. Durch derartige Anformungen kann mit einfachen Mitteln ein Aufnahmeraum für eine oder mehrere Dichtungen geschaffen werden, der im Sinne der vorliegenden Erfindung außerhalb des Antennenhorns bzw. einer gedachten Verlängerung oder Fortsetzung des Antennenhorns angeordnet ist.

Durch eine nach außen springende Stufe kann ferner eine mechanische Abstützung der Füllung erreicht und damit eine erhöhte Überdruckfähigkeit der Antenne insgesamt gewährleistet werden.

Zusätzlich oder alternativ kann die Füllung im Bereich der Dichtung eine Nut zur wenigstens teilweisen Aufnahme der Dichtung aufweisen. Dies kann beispielsweise vorteilhaft sein, wenn das Antennenhorn in einem in Hauptabstrahlrichtung vorne liegenden Bereich eine nach außen springende Anformung aufweist, die ebenfalls mit dem Material der Füllung ausgefüllt ist, jedoch außerhalb einer gedachten Verlängerung des Antennenhorns liegt. In einem solchen Bereich kann in der Füllung eine Nut zur Aufnahme der Dichtung angeordnet sein, so dass auf einfache Weise eine abdichtende Anordnung erreicht werden kann.

Um eine möglichst symmetrische und zentrierte Anordnung der Füllung innerhalb des Antennenhorns zu gewährleisten kann ferner zwischen dem Antennenhorn und der Füllung ein umlaufender Zentrierring angeordnet sein. Der Zentrierring kann zur Vermeidung von Reflexionen ebenfalls in einer nach außen springenden Nut des Antennenhorns angeordnet sein, wobei der Zentrierring zur Gewährleistung eines einfachen Aufbaus beispielsweise ebenfalls als O-Ring ausgebildet sein kann. Um eine zentrische Einkopplung der elektromagnetischen Wellen in die Füllung zu gewährleisten kann der Zentrierring beispielsweise in einem der Speisung zugewandten Endbereich der Füllung angeordnet sein. Auf diese Weise wird gewährleistet, dass die Füllung relativ zu der Speisung zentriert ausgerichtet ist.

Die vorliegende Erfindung wird nachfolgend anhand von Ausführungsbeispielen unter Bezugnahme auf die beigefügten Figuren eingehend erläutert.

Soweit nicht anders angegeben bezeichnen gleiche Bezugszeichen gleiche Bauelemente mit gleicher Funktion.

Es zeigen:
- Figur 1:: eine perspektivische Darstellung eines Längsschnitts in Hauptabstrahlrichtung eines ersten Ausführungsbeispiels einer Hornantenne,
- Figur 2:: eine alternative Ausgestaltung eines in Hauptabstrahlrichtung vorne liegenden Bereichs der Hornantenne aus Figur 1,
- Figur 3:: eine alternative Ausgestaltung eines in Hauptabstrahlrichtung hinten liegenden Bereichs der Hornantenne aus Figur 1 und
- Figur 4:: eine Visualisierung der durch die Maßnahmen der vorliegenden Erfindung erzielten Effekte auf die Ausbreitung elektromagnetischer Wellen.

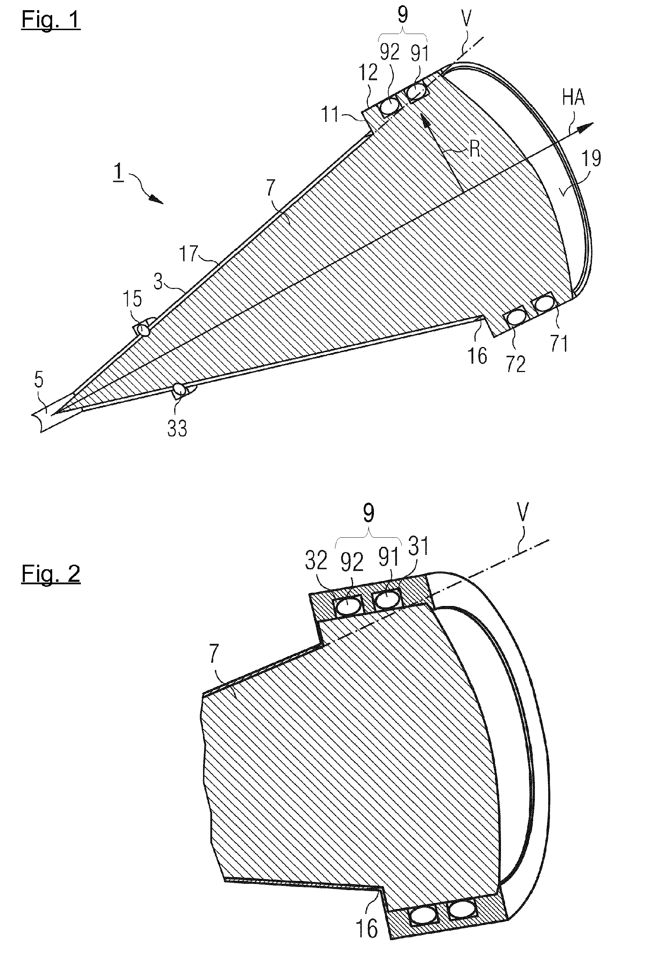

Figur 1 zeigt eine perspektivische Darstellung einer Hornantenne 1 in einem Längsschnitt in Hauptabstrahlrichtung HA. Ein Antennenhorn 3 der Hornantenne 1 ist im Wesentlichen als kegelförmig ausgebildeter metallischer Mantel ausgebildet, an dem in Hauptabstrahlrichtung HA vorderseitig eine nach außen springende Stufe 11 mit einem daran angeformten sich in Hauptabstrahlrichtung HA erstreckenden umlaufenden Kragen 12 angeformt ist. Durch die nach außen springende Stufe 11 und den Kragen 12 wird damit ein vorderseitig an dem Antennenhorn 3 sitzender zylindrischer Bereich gebildet, der im vorliegenden Ausführungsbeispiel genau wie das Antennenhorn 3 mit einer Füllung 7 annähernd vollständig ausgefüllt ist. Die Füllung 7 ist in einem in Hauptabstrahlrichtung HA hinten liegenden Bereich kegelförmig ausgebildet, wobei sich eine Kegelspitze in Richtung einer rückseitig an der Hornantenne 1 angeformten Speiseeinrichtung 5, vorn liegend einem Hohlleiter, erstreckt.

In Hauptabstrahlrichtung HA vorderseitig weist die Füllung 7 eine konvex geformte freie Oberfläche 19 auf, die durch einen Linseneffekt zur Richtcharakteristik der Hornantenne 1 beiträgt. Die Füllung 7 ist zu dem umlaufenden Kragen 12 hin umlaufend mittels eines ersten O-Rings 91 und eines zweiten O-Rings 92, die im vorliegenden Ausführungsbeispiel in zwei umlaufenden in der Füllung 7 angeordneten Nuten 71, 72 angeordnet sind, abgedichtet. Sowohl die beiden Nuten 71, 72 als auch die darin angeordneten O-Ringe 91, 92 sind, wie in der Darstellung in Figur 1 eingezeichnet, wenigstens teilweise außerhalb einer linearen Verlängerung V des Antennenhorns 3 angeordnet. Im vorliegenden Ausführungsbeispiel ist der erste O-Ring 91 zu etwa 50% außerhalb dieser Verlängerung V und der zweite O-Ring 92 vollständig außerhalb der Verlängerung V angeordnet, so dass Reflexionen elektromagnetischer Wellen an einer Grenzfläche zwischen der Füllung 7 und den O-Ringen 91, 92 deutlich reduziert werden. Durch die Stufe 11 wird ferner erreicht, dass die Füllung 7 in rückseitiger Richtung eine umlaufende Abstützung erfährt, wodurch eine erhöhte Überdruckfähigkeit der Hornantenne 1 erreicht werden kann.

Um eine zentrierte Ausrichtung der Füllung 7 relativ zu der als Hohlleiter ausgebildeten Speiseeinrichtung 5 zu erreichen ist zwischen dem Antennenhorn 3 und der Füllung 7 ferner ein umlaufender Zentrierring 15 angeordnet, der im vorliegenden Ausführungsbeispiel ebenfalls als O-Ring ausgebildet ist. Um auch Reflexionen an diesem Zentrierring 15 zu reduzieren oder nach Möglichkeit gänzlich zu vermeiden ist der Zentrierring 15 in einer radial nach außen springenden dritten Nut 33 des Antennenhorns 3 angeordnet, wodurch auch der Zentrierring 15 wenigstens teilweise aus einem Ausbreitungsbereich der elektromagnetischen Wellen entfernt ist. Um eine korrekte Ausrichtung der Füllung 7 innerhalb des Antennenhorns 3 zu gewährleisten ist im vorliegenden Ausführungsbeispiel an einem Übergang von dem Antennenhorn 3 zu der radial nach außen springenden Stufe 11 ein nach innen springender umlaufender Zentriersteg 16 vorgesehen, der in einem vorderseitigen Bereich der Hornantenne 1 einen Abstand zwischen der Füllung 7 und dem Antennenhorn 3 einstellt.

In Figur 2 ist eine alternative Ausgestaltungsform eines vorderseitigen Bereichs der Hornantenne 1 aus Figur 1 gezeigt.

In der in Figur 2 dargestellten alternativen Ausgestaltungsform weist der umlaufende Kragen 12 eine erhöhte Wandstärke auf, so dass in dem Kragen 12 umlaufend eine erste Nut 31 und eine zweite Nut 32 zur Aufnahme des ersten O-Rings 91 und des zweiten O-Rings 92 vorgesehen sein können. Auf diese Weise kann das Material der Füllung 7 an dieser Stelle nutenfrei ausgestaltet sein, wodurch eine weitere Reduktion möglicher Grenzflächenreflexionen erreicht werden kann. Im Unterschied zu den in Figur 1 dargestellten Ausführungsbeispiel sind gemäß Figur 2 beide O-Ringe 91, 92 außerhalb einer Verlängerung V des Antennenhorns 3 angeordnet, so dass eine besonders effektive Reduktion von Störungen erreicht werden kann. In Figur 2 ist nochmals der umlaufende Zentriersteg 16 gut zu erkennen, der eine Ausrichtung der Füllung 7 relativ zu dem Antennenhorn 3 im vorderseitigen Bereich gewährleistet.

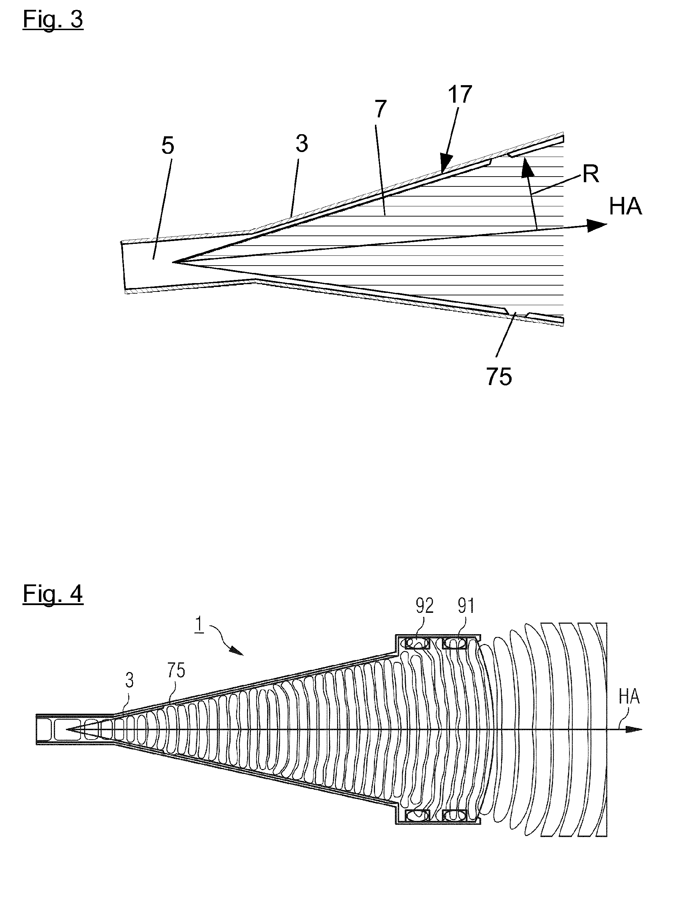

In Figur 3 ist eine alternative Ausgestaltungsform eines in Hauptabstrahlrichtung HA gesehenen rückseitigen Bereichs der Hornantenne 1 aus Figur 1 gezeigt.

Die Ausgestaltungsform gemäß Figur 3 unterscheidet sich im Wesentlichen dadurch, dass eine Zentrierung der Füllung 7 relativ zu dem Antennenhorn 3, insbesondere relativ zu der als Hohlleiter ausgebildeten Speiseeinrichtung 5 nicht durch einen mit einer nach außen springenden Nut angeordneten O-Ring, sondern durch eine an der Füllung 7 umlaufend vorgesehene Anformung 75 vorgesehen ist. Durch eine derartige Anformung 75 kann ebenfalls eine zentrierte Ausrichtung der Füllung 7 relativ zu der Speiseeinrichtung 5 erreicht werden, wodurch über die gesamte Länge der Füllung 7 ein definierter Luftspalte 17 zwischen der Füllung 7 und dem Antennenhorn 3 eingestellt werden kann. Eine entsprechende Anformung 75 stellt einen im Vergleich zu einer umlaufenden Nut mit einem darin angeordneten O-Ring reduzierten Herstellungsaufwand dar, wodurch mit verringerten Kosten ein vergleichbar gutes Ergebnis erzielt werden kann.

In Figur 4 ist exemplarisch die Ausbreitung elektromagnetischer Wellen innerhalb einer Hornantenne 1 gezeigt. Die in Figur 4 dargestellte Ausbreitung ist am Beispiel einer Hornantenne 1 mit einem vorderseitigen Bereich entsprechend dem aus Figur 1 aus einem rückseitigen Bereich entsprechend dem aus Figur 3 gezeigt. Wie aus der Darstellung aus Figur 4 entnommen werden kann sind an den O-Ringen 91, 92 sowie an der Anformung 75 nur geringe Störungen der Ausbreitung der elektromagnetischen Wellen im Inneren der Hornantenne 1 zu verzeichnen, so dass der erfindungsgemäße Effekt sehr gut erreicht wird.

### Bezugszeichenliste

- 1: Hornantenne
- 3: Antennhorn
- 5: Speiseeinrichtung
- 7: Füllung
- 9: Dichtung

- 11: Stufe
- 12: Kragen
- 15: Zentrierring
- 16: Zentriersteg
- 17: Luftspalt
- 19: freie Fläche

- 31: erste Nut des Antennenhorns
- 32: zweite Nut des Antennenhorns
- 33: dritte Nut des Antennenhorns

- 71: erste Nut der Füllung
- 72: zweite Nut der Füllung
- 75: Anformung

- 91: erster O-Ring
- 92: zweiter O-Ring

- HA: Hauptstrahlrichtung
- R: Radialrichtung
- V: Verlängerung

## Patentansprüche

1. Hornantenne (1) für ein Radarmessgerät, insbesondere ein Radar-Füllstandmessgerät, mit einem in vorderseitiger in einer Hauptabstrahlrichtung strahlenden Antennenhorn (3), einer rückseitigen Speiseeinrichtung (5) und einer Füllung (7), die die Hornantenne (1) wenigstens teilweise ausfüllt und vorderseitig verschließt, wobei zwischen der Füllung (7) und dem Antennenhorn (3) wenigstens eine Dichtung (9) angeordnet ist,
**dadurch gekennzeichnet, dass**
die Dichtung (9) in einer Radialrichtung (R) senkrecht zur Hauptabstrahlrichtung (HA) der Hornantenne (1) wenigstens teilweise außerhalb des Antennenhorns (3) oder einer Verlängerung (V) des Antennenhorns (3) angeordnet ist.

2. Hornantenne (1) gemäß Anspruch 1,
**dadurch gekennzeichnet, dass**
die Dichtung (9) als O-Ring (91, 92) ausgebildet ist.

3. Hornantenne (1) gemäß einem der vorhergehenden Ansprüche,
**dadurch gekennzeichnet, dass**
die Dichtung (9) in einer Nut (71, 72, 31, 32) angeordnet ist.

4. Hornantenne (1) gemäß einem der vorhergehenden Ansprüche,
**dadurch gekennzeichnet, dass**
das Antennenhorn (3) wenigstens im Bereich der Dichtung (9) eine in Radialrichtung (R) nach außen weisende Anformung (11) aufweist.

5. Hornantenne (1) gemäß Anspruch 4,
**dadurch gekennzeichnet, dass**
die Anformung (11) als in Radialrichtung (R) nach außen springende Stufe (11) mit einem sich in Hauptabstrahlrichtung (HA) erstreckenden umlaufenden Kragen (12) und/oder als umlaufende Nut (31, 32, 33) ausgebildet ist.

6. Hornantenne (1) gemäß einem der vorhergehenden Ansprüche,
**dadurch gekennzeichnet, dass**
die Füllung (7) im Bereich der Dichtung (9) eine Nut (71, 72) zur wenigstens teilweisen Aufnahme der Dichtung (9) aufweist.

7. Hornantenne (1) gemäß einem der vorhergehenden Ansprüche,
**dadurch gekennzeichnet, dass**
zwischen Antennenhorn (3) und Füllung (7) ein umlaufender Zentrierring (15) angeordnet ist.

8. Hornantenne (1) gemäß Anspruch 7,
**dadurch gekennzeichnet, dass**
der Zentrierring (15) als O-Ring (91, 92) ausgebildet ist.

9. Hornantenne (1) gemäß einem der Ansprüche 7 oder 8,
**dadurch gekennzeichnet, dass**
der Zentrierring (15) in einer umlaufenden dritten Nut (33) des Antennenhorns (3) angeordnet ist.

10. Hornantenne (1) gemäß einem der vorhergehenden Ansprüche,
**dadurch gekennzeichnet, dass**
in einem in Hauptabstrahlrichtung (HA) vorne liegenden Abschnitt wenigstens zwei O-Ringe (91, 92) und in einem in Hauptabstrahlrichtung (HA) hinten liegenden Abschnitt ein Zentrierring (15) angeordnet ist.
